Europäisches Patentamt

(19) European Patent Office

Office européen des brevets

(11) Publication number: **0 075 052**
**B1**

# (12) EUROPEAN PATENT SPECIFICATION

(45) Date of publication of patent specification: 03.06.87

(21) Application number: 81304361.9

(22) Date of filing: 22.09.81

(51) Int. Cl.⁴: **F 02 F 3/02, F 02 F 3/26, B 22 D 19/00**

(54) Pistons.

(43) Date of publication of application:
30.03.83 Bulletin 83/13

(45) Publication of the grant of the patent:
03.06.87 Bulletin 87/23

(84) Designated Contracting States:
AT DE FR IT SE

(56) References cited:
GB-A-1 181 499
GB-A-2 060 130
US-A-2 473 254
US-A-2 771 327
US-A-3 305 918

Foundry Management & Technology, August
1974, USA "Squeeze Casting Comes of Age"

(73) Proprietor: AE PLC
Cawston House Cawston
Rugby Warwickshire CV22 7SB (GB)

(72) Inventor: Nice, Walter Roy Eric
42, Haglane Copse
Lymington Hampshire (GB)

(74) Representative: Warren, Francis Charles et al
Baron & Warren 18 South End Kensington
London W8 5BU (GB)

Courier Press, Leamington Spa, England.

## Description

The present invention relates to pistons for internal combustion engines.

It is known that a piston of a light metal alloy such as aluminium, and particularly a diesel piston having a combustion bowl, may experience cracking on the crown under certain operational cycles. Such cracking is more prevalent around the edge of the combustion bowl and may be particularly severe if the combustion bowl is of the re-entrant type.

It is also known that such cracking can be eliminated by the use of a cast-in reinforcement made from high strength, high thermal conductivity copper alloys, such as for example beryllium-copper and copper-nickel-silicon bronze, whereby the crack-susceptible edge of the combustion bowl is machined within the copper alloy material.

Because the strength of the aluminium alloy in the piston crown around the copper alloy reinforcement is inadequate to withstand stresses imposed by the inertia load of the copper alloy reinforcement it is usually necessary to anchor the reinforcement by projecting legs (which may be of stainless steel or of copper alloy) into the cooler parts of the piston.

However, the production of such a piston gives rise to problems. These basically are:

a) accuracy of location if the piston is made by conventional crown-up casting techniques, and

b) of ensuring freedom from skirt porosity if the casting is cast crown-down, thereby facilitating accurate location of the reinforcement and anchor legs.

US—A—2473254 discloses a method of manufacturing a light metal alloy piston having an insert of a high heat conductivity material embedded in the head to form a heat dam. The piston is cast in the crown-down position by gravity casting, that is to say by pouring the piston metal onto the inert placed in the bottom of the casting mold. The heat dam effect is realised by the resulting very small gap which occurs between the insert and the piston body forming a discontinuity of metal. This gap is an inherent result of gravity casting where contraction of the metal occurs on solidification.

The August 1974 issue of "Foundry Management & Technology" (USA) includes on pages 76 to 79 an article entitled "Squeeze Casting Comes of Age" which gives a general review of the technique of squeeze casting and explains that it consists in pouring molten metal into a bottom die and allowing it to solidify partially and then forcing down an upper die whereby the metal solidifies rapidly under considerable pressure. A suggestion is made that this technique may be employed for the fabrication of numerous articles, including inter alia pistons, hubs, bushings, gear blanks, housings, etc. However, apart from this general suggestion, there is no disclosure or teaching as to how squeeze casting would be applied in practice for the manufacture of pistons, neither does this article concern itself in any way with the technique of cast-in reinforcements.

According to the present invention, a method of manufacturing a light metal alloy piston having an insert in the top surface thereof which in the finished piston will provide a reinforcement for the rim of a combustion bowl subsequently machined in the crown of the piston and in which the piston is formed in a casting mold in the crown-down position, and wherein a reinforcement insert of a high strength, high thermal conductivity metal is positioned in the bottom of the mold and sufficient light metal alloy to form the piston is then poured into the mold, characterised in that said insert is of beryllium copper or copper-nickel-silicon bronze having a shape such that it will form the lip of a re-entrant combustion bowl and has secured thereto a plurality of legs which provide an anchorage for the reinforcement insert in the alloy, and further in that pressure is applied to the alloy whilst it is in the plastic state prior to solidification so as to cause the piston alloy to form both around the reinforcement insert and the legs and also to promote an intimate bond between the alloy and the insert and said legs.

Thus, the method is put into effect by squeeze casting of the alloy i.e. by applying pressure to the alloy whilst it is in the plastic state prior to solidification.

In order that the invention may be more readily understood, an embodiment of a piston manufactured in accordance therewith will now be described by way of example and with reference to the accompanying drawings, in which:—

Figure 1 is an axial section through one embodiment of a piston according to the invention, and

Figure 2 shows a stage in the manufacture of the piston of Figure 1.

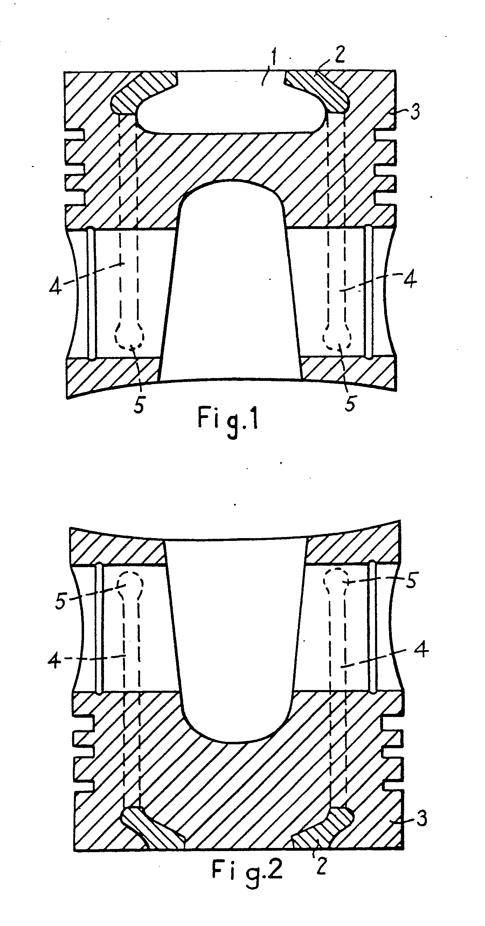

The piston shown in the drawings is made from an aluminium alloy and is intended for use in diesel engines. The final manufactured piston is shown in Figure 1 and has a re-entrant combustion bowl 1 the edges of which are protected by a rim formed by a reinforcement insert 2 of a high strength, high thermal conductivity alloy. The alloy can, for example, be beryllium copper or copper-nickel-silicon bronze. The insert forming the rim 2 is bonded to the metal of the main body 3 of the piston. The insert 2 is further anchored by a number of legs 4 which are screwed into the insert 2 and embedded in the piston skirt. The legs 4 have an enlarged end as shown at 5 to obtain a good mechanical key and may be of stainless steel or a copper alloy. Alternatively the legs may be of irregular shape.

If the piston were to be in the normal crown-up manner, the insert 2 has to be suspended above the mould and the molten aluminium alloy passed around it. This procedure causes problems in accurately locating the insert.

In order to avoid this location problem, the piston is formed in the crown-down position.

However it will be appreciated that the combustion bowl 1 is relatively deep so that the thickness of the piston crown is considerable.

Thus difficulty would be encountered in a normal crown-down gravity casting operation in feeding the molten metal for the crown section through the relatively thin wall section of the piston, and this could cause porosity in the thinner parts of the casting. This problem is met by using the following method.

The reinforcement insert 2 is placed in the bottom of a die and the piston is cast crown-down. To reduce the occurrence of porosity, pressure is applied to the cast metal alloy whilst it is in the plastic state prior to its final solidification. The pressure is thus applied during casting by squeeze casting. The result is a piston as shown in Figure 2, and this piston is machined to provide a re-entrant combustion bowl as is shown in Figure 1.

It will be appreciated that the method described may be used with pistons having structures which differ from that shown in the accompanying drawings but which present similar problems.

It will also be appreciated that the method just described
a) substantially eliminates porosity in the thinner parts of the casting
b) ensures satisfactory bonding (either metallurgical or mechanical) to the anchor legs, and
c) improves the mechanical properties of the parent casting alloy.

Whilst the primary purpose of the invention is to achieve combined locational accuracy and soundness of the overall piston structure, it also enables the attainment of a high degree of mechanical locking of the anchor legs, which cannot be achieved by conventional casting in either the crown-up or crown-down modes, and thereby reduces the dependence upon metallurgical bonding (i.e. intermetallic compound formation between the aluminium alloy and the leg material). Thus the copper alloy reinforcement and anchor legs need not necessarily undergo a preliminary bonding operation previously considered to be essential.

## Claim

A method of manufacturing a light metal alloy piston having an insert in the top surface thereof which in the finished piston will provide a reinforcement for the rim of a combustion bowl subsequently machined in the crown of the piston and in which the piston is formed in a casting mold in the crown-down position, and wherein a reinforcement insert of a high strength, high thermal conductivity metal is positioned in the bottom of the mold and sufficient light metal alloy to form the piston is then poured into the mold, characterised in that said insert (2) is of beryllium copper or copper-nickel-silicon bronze having a shape such that is will form the lip of a re-entrant combustion bowl and has secured thereto a plurality of legs (4) which provide an anchorage for the reinforcement insert in the alloy, and further in that pressure is applied to the alloy whilst it is in the plastic state prior to solidification so as to cause the piston alloy to form both around the reinforcement insert (2) and the legs (4) and also to promote an initimate bond between the alloy and the insert and said legs.

## Patentanspruch

Verfahren zur Herstellung eines Kolbens aus einer Leichtmetall-Legierung mit einem Einsatz in der oberen Fläche desselben, der im fertiggestellten Kolben ein Verstärkung für die Randzone einer nachfolgend in die Kolbenkrone eingearbeiteten Verbrennungsmulde bildet, wobei der Kolben mit der Krone nach unten in einer Gießform geformt wird und einen Verstärkungs-Einsatz aus einem hochfesten, hochwärmeleitfähigen Metall auf dem Boden der Form plaziert und ein geeignetes Leichtmetall zur Herstellung des Kolbens in die Form gegossen wird, dadurch gekennzeichnet, daß der Einsatz (2) aus einer Beryllium-Kupfer- oder Kupfer-Nickel-Siliziumbronze besteht und eine Formgebung derart aufweist, daß er die Lippe einer einspringend eingeformten Verbrennungsmulde ausbildet und befestigt daran eine Anzahl Schenkel (4) aufweist, die eine Verankerung für diesen Einsatz in der Legierung bildet, und daß ferner Druck auf die Legierung im plastischen Zustand vor dem Erstarren ausgeübt wird, um damit zu bewirken, daß die Kolben-Legierung den Verstärkungs-Einsatz (2) als auch die Schenkel (4) formschlüssig umschließt, und auch eine innige Verbindung zwischen der Legierung und dem Einsatz sowie den Schenkeln zu fördern.

## Revendication

Procédé pour la fabrication d'un piston en un alliage léger possédant un insert dans sa surface supérieure qui, dans le piston fini, crée un renforcement pour une préchambre de combustion ultérieure usinée dans la tête de piston et dans lequel le piston est moulé dans un moule de fonte en position tête en bas, et dans lequel un insert de renforcement, en un métal à résistance mécanique élevée et à conductivité thermique élevée est placé au fond du moule, et une quantité d'alliage métallique léger suffisante pour former le piston est ensuite versée dans le moule, caractérisé en ce que ledit insert (2) est en bronze au béryllium-cuivre ou au cuivre-nickel-silicium ayant une forme telle qu'il va former la lèvre d'une préchambre de combustion rentrante et qu'y sont fixés une pluralité de pieds (4) qui assurent un ancrage pour l'insert de renforcement dans l'alliage, et en outre en ce qu'une pression est appliquée sur l'alliage tandis qu'il est à l'état plastique avant solidification de façon que l'alliage du piston soit moulé tant autour de l'insert de renforcement (2) que des pieds (4), et aussi de façon à favoriser une liaison intime entre l'alliage et l'insert et lesdits pieds.

Fig.1

Fig.2